# EUROPEAN PATENT SPECIFICATION

(11) **EP 4 268 498 B1**
(45) Date of publication and mention of the grant of the patent: **04.02.2026**
(21) Application number: 20838105.3
(22) Date of filing: 23.12.2020
(51) Int. Cl.: H04W 76/15, H04W 24/10

(54) **MULTI-LINK OPERATION BASED MEASUREMENT REPORTING**
AUF MEHRFACHVERBINDUNGSBETRIEB BASIERENDE MESSMELDUNG
RAPPORT DE MESURE BASÉ SUR UN FONCTIONNEMENT À LIAISONS MULTIPLES

(43) Date of publication of application: 01.11.2023
(73) Proprietor: Telefonaktiebolaget LM Ericsson (publ), 164 83 Stockholm (SE)
(72) Inventor: LOPEZ, Miguel, 52074 Aachen (DE); SEDIN, Jonas, TW8 0SU Brentford (GB); AMBEDE, Abhishek, 141 58 Huddinge (SE); WILHELMSSON, Leif, 222 20 Lund (SE)
(74) Representative: Ericsson
(86) International application number: PCT/EP2020/087837
(87) International publication number: WO 2022/135728

(56) References cited:
- WO-A1-2016/160269
- US-A1- 2018 227 814
- "IEEE Standard for Information technology Telecommunications and information exchange between systems Local and metropolitan area networks-Specific requirements - Part 11: Wireless LAN Medium Access Control (MAC) and Physical Layer (PHY) Specifications", IEEE STD 802.11-2016 (REVISION OF IEEE STD 802.11-2012, 14 December 2016 (2016-12-14), pages 1 - 3534
- EDWARD AU (HUAWEI): "Compendium of straw polls and potential changes to the Specification Framework Document", vol. 802.11 EHT; 802.11be, no. 95, 19 November 2020 (2020-11-19), pages 1 - 274, XP068175223, Retrieved from the Internet <URL:https://mentor.ieee.org/802.11/dcn/20/11-20-0566-95-00be-compendium-of-straw-polls-and-potential-changes-to-the-specification-framework-document.docx> [retrieved on 20201119]

## Description

### Technical Field

The present invention relates to methods for controlling wireless transmissions and to corresponding wireless devices and computer programs.

### Background

In wireless communication technologies, there is an increased interest in using unlicensed bands, like the 2.4 GHz ISM band, the 5 GHz band, the 6 GHz band, and the 60 GHz band using more advanced channel access technologies. Historically, WLAN (Wireless Local Area Network) technology based on the IEEE 802.11 standards family, also denoted as Wi-Fi, has been the dominant standard in unlicensed bands, specifically for applications requiring support for high data rates.

The WLAN technology also supports reporting of radio measurements. For example, a corresponding radio measurement framework is specified in "IEEE Standard for Information technology-Telecommunications and information exchange between systems Local and metropolitan area networks-Specific requirements - Part 11: Wireless LAN Medium Access Control (MAC) and Physical Layer (PHY) Specifications," in IEEE Std 802.11-2016 (Revision of IEEE Std 802.11-2012) , vol., no., pp.1-3534, 14 Dec. 2016, in the following denoted as "IEEE 802.11 Specifications", see in particular section 11.11 of the IEEE 802.11 Specifications. The radio measurement framework may provide assistance for operation and management of the WLAN network.

More specifically, a station (STA) can ask another STA to perform radio measurements based on requesting and reporting. In some situations a STA may refuse to perform a requested measurement. Measurement quantities which can be requested include: a Beacon Report or Frame Report, indicating signal strength of a beacon or a frame, respectively, a Channel Load Report, indicating load on a channel in terms of a fraction of time in which the channel is busy, a Noise Histogram Report, indicating measured noise power and interference in terms of a histogram, a STA statistics report, indicating STA statistics, such as number of MSDUs (Medium Access Control Service Data Units) received during a requested time interval.

The STA can either be requested to perform the measurements on an operating channel or on a non-operating channel. If the STA is requested to measure on a non-operating channel it typically needs to temporarily cancel transmission and reception of data traffic while performing the measurements on the non-operating channel. In some situations, the STA could also refuse to perform the measurements. In that case, the STA is required to report back that it is refusing to perform the measurement. Reasons for refusing the measurements may include a risk of reduced quality of service (QoS), unacceptable increase of power consumption, measurement scheduling conflicts, or the like. By way of example, a STA performing requested measurements in a non-operating channel may need to retune its radio circuitry to a center frequency which differs from that of its operating channel, which results in losing synchronization to the medium and may adversely impact the STA's ability to quickly transmit or receive on the operating channel. If an urgent packet arrives in the STA's transmit (TX) buffer, the STA may first need to synchronize to the medium, which may take some time, and then contend for access to the operating channel or request scheduling of an uplink (UL) transmission. Due to such situations, there is a considerable likelihood that a STA refuses to perform a requested measurement.

The WLAN technology also supports enhancements which involve that access to the medium is controlled by an access point (AP). For example, corresponding mechanisms are specified in the IEEE 802.11ax technology, see "IEEE P802.11ax/D6.0 Draft Standard for Information technology- Tele-communications and information exchange between systems Local and metropolitan area networks-Specific requirements Part 11: Wireless LAN Medium Access Control (MAC) and Physical Layer (PHY) Specifications Amendment 1: Enhancements for High Efficiency WLAN (November 2019)", in the following denoted as "IEEE 802.11ax Draft". For example, the IEEE 802.11ax Draft" specifies trigger frames that enable an AP to schedule UL transmissions from STAs. Further, an enhancement of the WLAN technology referred to as EHT (Extremely High Throughput), to be introduced with an amendment denoted as IEEE 802.11be, involves plans to support multi-AP systems where the AP's collaborate in the allocation of radio resources. While radio measurements reported by the STAs are useful in such scenarios, availability of such measurements may be limited, e.g., because the STAs may refuse to perform requested measurements.

WO 2016/160269 A1 describes multi-link channels quality measurement and reporting. IEEE contribution "Compendium of straw polls and potential changes to the Specification Framework Document", document IEEE 802.11-20/0566r95 (November 2020), describes multi-link setup and exchange of capabilities and operating parameters.

Accordingly, there is a need for techniques which allow for efficiently performing and reporting measurements in a wireless communication system.

### Summary

The present invention provides a method according to claim 1, a method according to claim 7, a wireless communication device according to claim 14, a wireless communication device according to claim 16, a computer program or computer program product according to claim 18, and a computer program or computer program product according to claim 19. The dependent claims define further embodiments.

According to an embodiment, a method of controlling wireless transmissions in a wireless communication system is provided. According to the method, a wireless communication device maintains, on a first channel, a radio link to a further wireless communication device which does not support multi-link operation. The wireless communication device sends, to the further wireless communication device, an indication that the wireless communication device supports multi-link operation. Further, the wireless communication device receives, from the further wireless communication device, a request to utilize the multi-link operation to perform at least one measurement on the second channel while maintaining the radio link to the further wireless communication device. In response to the request, the wireless communication device utilizes the multi-link operation to perform at least one measurement on a second channel while maintaining the radio link to the further wireless communication device. Further, the wireless communication device sends, to the further wireless communication device, one or more measurement reports representing the at least one measurement.

According to a further embodiment, a method of controlling wireless transmissions in a wireless communication system is provided. According to the method, a wireless communication device, which does not support multi-link operation, maintains, on a first channel, a radio link to at least one further wireless communication device. The wireless communication device receives, from the at least one further wireless communication device, an indication that the further wireless communication device supports multi-link operation. Further, the wireless communication device sends, to the at least one further wireless communication device, a request to utilize the multi-link operation to perform at least one measurement on a second channel while maintaining the radio link to the wireless communication device. Further, the wireless communication device receives, from the at least one further wireless communication device, one or more measurement reports representing the at least one measurement.

According to a further embodiment, a wireless communication device is provided. The wireless communication device is configured to maintain, on a first channel, a radio link to a further wireless communication device which does not support multi-link operation. Further, the wireless communication device is configured to send, to the further wireless communication device, an indication that the wireless communication device supports multi-link operation. Further, the wireless communication device is configured to receive, from the further wireless communication device, a request to utilize the multi-link operation to perform at least one measurement on the second channel while maintaining the radio link to the further wireless communication device. Further, the wireless communication device is configured to, in response to the request, utilize the multi-link operation to perform at least one measurement on a second channel while maintaining the radio link to the further wireless communication device. Further, the wireless communication device is configured to send, to the further wireless communication device, one or more measurement reports representing the at least one measurement.

According to a further embodiment, a wireless communication device is provided. The wireless communication device comprises at least one processor and a memory. The memory contains instructions executable by said at least one processor, whereby the wireless communication device is operative to maintain, on a first channel, a radio link to a further wireless communication device which does not support multi-link operation. Further, the memory contains instructions executable by said at least one processor, whereby the wireless communication device is operative to send, to the further wireless communication device, an indication that the wireless communication device supports multi-link operation. Further, the memory contains instructions executable by said at least one processor, whereby the wireless communication device is operative to receive, from the further wireless communication device, a request to utilize the multi-link operation to perform at least one measurement on the second channel while maintaining the radio link to the further wireless communication device. Further, the memory contains instructions executable by said at least one processor, whereby the wireless communication device is operative to, in response to the request, utilize the multi-link operation to perform at least one measurement on a second channel while maintaining the radio link to the further wireless communication device. Further, the memory contains instructions executable by said at least one processor, whereby the wireless communication device is operative to send, to the further wireless communication device, one or more measurement reports representing the at least one measurement.

According to a further embodiment, a wireless communication device is provided. The wireless communication device does not support multi-link operation and is configured to maintain, on a first channel, a radio link to at least one further wireless communication device. Further, the wireless communication device is configured to receive, from the at least one further wireless communication device, an indication that the further wireless communication device supports multi-link operation. Further, the wireless communication device is configured to send, to the at least one further wireless communication device, a request to utilize the multi-link operation to perform at least one measurement on a second channel while maintaining the radio link to the wireless communication device. Further, the wireless communication device is configured to receive, from the at least one further wireless communication device, one or more measurement reports representing the at least one measurement.

According to a further embodiment, a wireless communication device is provided. The wireless communication device does not support multi-link operation and comprises at least one processor and a memory. The memory contains instructions executable by said at least one processor, whereby the wireless communication device is operative to maintain, on a first channel, a radio link to at least one further wireless communication device. Further, the memory contains instructions executable by said at least one processor, whereby the wireless communication device is operative to receive, from the at least one further wireless communication device, an indication that the further wireless communication device supports multi-link operation. Further, the memory contains instructions executable by said at least one processor, whereby the wireless communication device is operative to send, to the at least one further wireless communication device, a request to utilize the multi-link operation to perform at least one measurement on a second channel while maintaining the radio link to the wireless communication device. Further, the memory contains instructions executable by said at least one processor, whereby the wireless communication device is operative to receive, from the at least one further wireless communication device, one or more measurement reports representing the at least one measurement.

According to a further embodiment of the invention, a computer program or computer program product is provided, e.g., in the form of a non-transitory storage medium, which comprises program code to be executed by at least one processor of a wireless communication device. Execution of the program code causes the wireless communication device to maintain, on a first channel, a radio link to a further wireless communication device which does not support multi-link operation. Further, execution of the program code causes the wireless communication device to send, to the further wireless communication device, an indication that the wireless communication device supports multi-link operation. Further, execution of the program code causes the wireless communication device to receive, from the further wireless communication device, a request to utilize the multi-link operation to perform at least one measurement on the second channel while maintaining the radio link to the further wireless communication device. Further, execution of the program code causes the wireless communication device to, in response to the request, utilize the multi-link operation to perform at least one measurement on a second channel while maintaining the radio link to the further wireless communication device. Further, execution of the program code causes the wireless communication device to send, to the further wireless communication device, one or more measurement reports representing the at least one measurement.

According to a further embodiment of the invention, a computer program or computer program product is provided, e.g., in the form of a non-transitory storage medium, which comprises program code to be executed by at least one processor of a wireless communication device which does not support multi-link operation. Execution of the program code causes the wireless communication device to maintain, on a first channel, a radio link to a further wireless communication device. Further, execution of the program code causes the wireless communication device to send, to the further wireless communication device, an indication that the wireless communication device supports multi-link operation. Further, execution of the program code causes the wireless communication device to receive a request from the further wireless communication device. Further, execution of the program code causes the wireless communication device to, in response to the request, utilize the multi-link operation to perform at least one measurement on a second channel while maintaining the radio link to the further wireless communication device. Further, execution of the program code causes the wireless communication device to send, to the further wireless communication device, one or more measurement reports representing the at least one measurement.

Details of such embodiments and further embodiments will be apparent from the following detailed description of embodiments.

### Brief Description of the Drawings

Fig. 1 schematically illustrates a wireless communication system according to an embodiment.
Fig. 2 schematically illustrates processes for sharing of a TXOP according to an embodiment.
Fig. 3 schematically illustrates multi-link operation according to an embodiment.
Fig. 4 shows a flowchart for schematically illustrating a method according to an embodiment.
Fig. 5 shows a block diagram for schematically illustrating functionalities of a wireless communication device according to an embodiment.
Fig. 6 shows a flowchart for schematically illustrating a method according to a further embodiment.
Fig. 7 shows a block diagram for schematically illustrating functionalities of a wireless communication device according to a further embodiment.
Fig. 8 schematically illustrates structures of a STA according to an embodiment.
Fig. 9 schematically illustrates structures of an AP according to an embodiment.

### Detailed Description of Embodiments

In the following, concepts in accordance with exemplary embodiments of the invention will be explained in more detail and with reference to the accompanying drawings. The illustrated embodiments relate to controlling of wireless transmissions in a wireless communication system. The wireless communication system may be a WLAN (Wireless Local Area Network) system based on a IEEE 802.11 technology. However, it is noted that the illustrated concepts could also be applied to other wireless communication technologies, e.g., to contention-based modes of the LTE (Long Term Evolution) or NR (New Radio) technology specified by 3GPP (3^{rd} Generation Partnership Project).

The illustrated concepts involve that a wireless communication device utilizes multi-link operation (MLO) to efficiently perform and report requested measurements. In particular, the utilization of the MLO involves that on a first channel the wireless communication device maintains a radio link to another wireless communication device, while at the same time the wireless communication device performs measurements on one or more second channels, which are then reported to the further wireless communication device. The reporting may be accomplished via the maintained radio link. When assuming that the wireless communication system is based on a IEEE 802.11 technology WLAN, the wireless communication device may be a non-AP STA, and the other wireless communication device may be an AP to which the non-AP STA is connected. However, other scenarios are conceivable as well, e.g., scenarios where both APs are non-AP STAs connected by an ad-hoc radio link.

The illustrates concepts may for example be applied in situations where an AP either does not support MLO or decides to operate in a single link mode, while one or more STAs connected to the AP support MLO. In such situations, the AP may request that one or more of the STAs perform measurements utilizing the MLO and report the measurements to the AP. By utilizing the MLO, the STAs can maintain their existing radio link while performing the measurements, which is possible without losing synchronization to the medium and without a risk of QoS degradations or delays, so that there is low risk of refusal to perform the requested measurements. The AP may utilize the reported measurements in combination with measurements performed by the AP itself, thereby gaining a more comprehensive knowledge of conditions in the AP's vicinity.

The illustrated concepts may involve that the AP signals support of an operating mode for cooperating with STAs that support utilization of MLO for maintaining a radio link on one channel while at the same time performing measurements on one or more other channels. This operating mode is in the following also denoted as limited MLO. For example, the AP may signal support of the limited MLO via one or more management frames, e.g., in a capability element of a beacon frame. The STAs supporting MLO may in turn announce their MLO capabilities. Further, the AP may also utilize support signaling as also used for MLO, even if the AP operates on a single channel. Upon association, a non-AP STA informs its MLO capabilities to the AP. For requesting measurement reports, the AP can select one or more STAs which announced support of MLO.

The MLO may be based on ML (multi-link) functionalities of the EHT technology according to the IEEE 802.11be amendment. In these ML functionalities, a multi-link device (MLD) has multiple affiliated STAs, each of which can communicate using independent wireless channels or links. For example, an MLD can have two affiliated STAs, one operating using one or more channels in the 5 GHz frequency band and the other operating using one or more channels in the 6 GHz frequency band. According to another example, an MLD can have two affiliated STAs, each operating using channels in the 6 GHz frequency band. As used herein, a STA capable of performing MLO is considered to be an MLD.

An MLD can use its affiliated STAs and corresponding supported channels to perform simultaneous transmit (TX) MLO, simultaneous receive (RX) MLO, or simultaneous transmit and receive (STR) MLO. If a TX operation on one channel results in inability to perform RX operation on another channel, that pair of channels is classified as non-STR (NSTR).

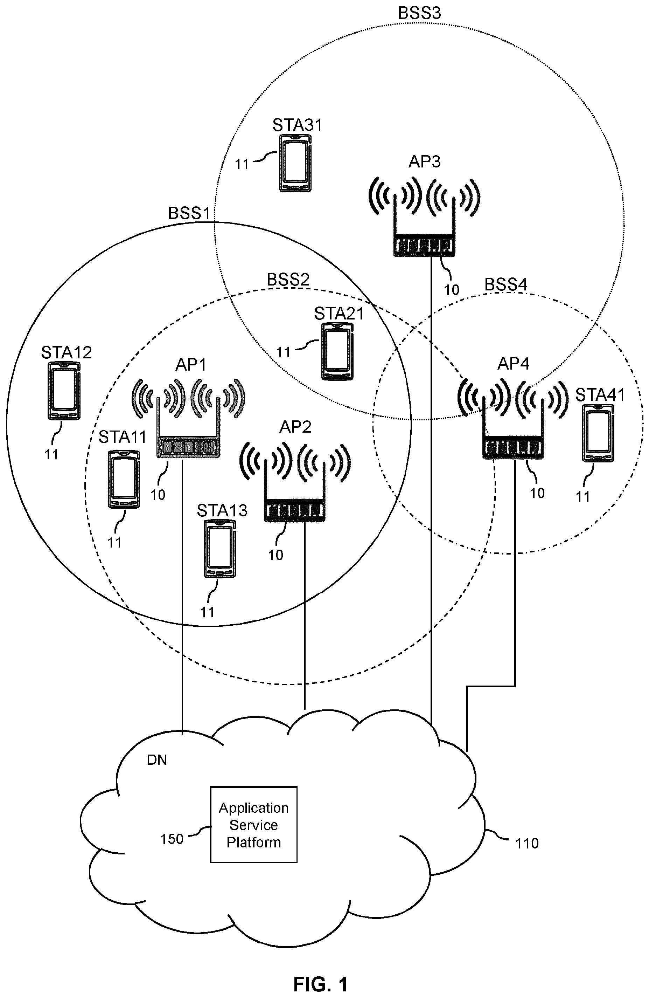

Fig. 1 illustrates an exemplary wireless communication system in which the illustrated concepts may be implemented. In the illustrated example, the wireless communication system includes multiple access points (APs) 10, in the illustrated example referred to as AP1, AP2, AP3, AP4, and multiple stations (STAs) 11, in the illustrated example referred to as STA11, STA12, STA13, STA21, STA31, STA32, and STA41. The stations STA11, STA12, and STA13 are served by AP1 (in a first BSS denoted as BSS1), the station STA21 is served by AP2 (in a second BSS denoted as BSS2). The stations STA31 and STA32 are served by AP3 (in a third BSS denoted as BSS3). The station STA41 is served by AP4 (in a fourth BSS denoted as BSS4). The stations 11 may correspond to various kinds of wireless devices, for example user terminals, such as mobile or stationary computing devices like smartphones, laptop computers, desktop computers, tablet computers, gaming devices, or the like. Further, the stations 11 could for example correspond to other kinds of equipment like smart home devices, printers, multimedia devices, data storage devices, or the like.

In the example of Fig. 1, each of the stations 11 may connect through a radio link to one of the APs 10. For example depending on location or channel conditions experienced by a given station 11, the station 11 may select an appropriate AP 10 and BSS for establishing the radio link. The radio link may be based on one or more OFDM carriers from a frequency spectrum which is shared on the basis of a contention based mechanism, e.g., an unlicensed band like the 2.4 GHz ISM band, the 5 GHz band, the 6 GHz band, or the 60 GHz band. Some of the stations 11 may support MLO, i.e., may be MLDs.

Each AP 10 may provide data connectivity of the stations 11 connected to the AP 10. As further illustrated, the APs 10 may be connected to a data network (DN) 110. In this way, the APs 10 may also provide data connectivity of stations 11 connected to different APs 10. Further, the APs 10 may also provide data connectivity of the stations 11 to other entities, e.g., to one or more servers, service providers, data sources, data sinks, user terminals, or the like. Accordingly, the radio link established between a given station 11 and its serving AP 10 may be used for providing various kinds of services to the station 11, e.g., a voice service, a multimedia service, or other data service. Such services may be based on applications which are executed on the station 11 and/or on a device linked to the station 11. By way of example, Fig. 1 illustrates an application service platform 150 provided in the DN 110. The application(s) executed on the station 11 and/or on one or more other devices linked to the station 11 may use the radio link for data communication with one or more other stations 11 and/or the application service platform 150, thereby enabling utilization of the corresponding service(s) at the station 11.

As mentioned above, the illustrated concepts may be based on the limited MLO operating mode. In limited MLO the AP and each of its associated STAs communicate using a single radio link, i.e., on a single channel. Any exchange of radio frames, including management frames, control frames, action frames, and data frames, occurs over this single channel.

However, the AP may request that the associated STA additionally perform measurements on one or more other channels, utilizing the MLO supported by the STA to simultaneously maintain the radio link to the AP. The illustrated concepts may be based on signaling using various kinds of frames, in particular beacon frames, probe request frames, probe response frames, association request frames, association response frames, reassociation request frames, and/or reassociation response frames.

Beacon frames may be broadcast periodically by the AP in a BSS. The beacon frames may include capability elements and operation elements. In some scenarios the AP may include an indication into a beacon frame, into a capability element or into an operation element, to indicate limited MLO of the AP.

Probe response frames may be sent by the AP to one or more STAs in response to probe request frames received from the respective STA. The probe response frames may include capability elements and operation elements. In some scenarios, the AP may include an indication into a probe response frame, e.g., into a capability element or an operation element, to indicate limited MLO of the AP.

Association and reassociation request frames may be sent by a STA to the AP managing a basic service set (BSS) to request joining the BSS, and the AP responds to these frames by sending an association or reassociation response frame, respectively. A reassociation request frame may be regarded as a specific case of an association request frame, which is used in scenarios when the STA had already been previously associated to the AP. Similarly, a reassociation response frame may be regarded as a specific case of an association response frame. The association request or reassociation request frames may include capability elements and operation elements. In some scenarios, a STA includes an element in the association/reassociation frame, e.g., into a capability element or into an operation element, to indicate support of MLO to the AP. The indication may also provide further information related to the supported MLO, e.g., a number of supported simultaneous links, whether STR or NSTR MLO is supported, supported capabilities of each link, such as supported frequency bands, e.g., 2.4 GHz, 5 GHz, or 6 GHz, and/or supported bandwidth, e.g., 40 MHz, 80 MHz, 160 MHz, 80+80 MHz, or the like.

Probe request frames may be sent by a STA to solicit a probe response frame from an AP or from several APs operating on a particular channel. The probe request frames may include capability elements and operation elements. In some scenarios, a STA may include an indication into the probe request frame, e.g., into a capability element or into an operation element, to indicate support of MLO to the AP. The indication may also provide further information related to the supported MLO, e.g., a number of supported simultaneous links, whether STR or NSTR MLO is supported, supported capabilities of each link, such as supported frequency bands, e.g., 2.4 GHz, 5 GHz, or 6 GHz, and/or supported bandwidth, e.g., 40 MHz, 80 MHz, 160 MHz, 80+80 MHz, or the like.

Based on the indicated information, the AP may select one or more STAs and send measurement requests to these one or more STAs, and these selected STAs may then provide measurement reports to the AP. As a first example, a situation like illustrated in Fig. 1 for BSS1 may be considered, where three STAs, namely STA11, STA12, and STA13 are associated with AP1. In this example it could be assumed that STA11 does not support MLO, that STA12 supports NSTR MLO, and that STA13 supports STR MLO. Further, it could be assumed that AP1 needs measurement information on its operating channel and on one non-operating channel, and that it has downlink (DL) data to be transmitted to STA13. In this case, AP1 could decide to request measurements from STA12. This decision may be beneficial because STA12 can potentially perform the requested measurements faster and with less overhead than STA11, and because, as compared to STA13, there is no risk that the measurements compromise QoS of upcoming DL data transmissions. As a second example, it could be assumed that in the same situation AP1 needs measurement information on one non-operating channel and that AP1 has received buffer status reports from the STA11, STA12, and STA13, indicating that each of these STAs has UL data to be transmitted. In this case, AP1 could request STA13 to perform measurements on the non-operating channel, since as compared to STA11 and STA12 it can perform the measurements without causing excessive delay of the upcoming transmissions of UL data.

In some scenarios also the AP could be an MLD but still decide to use the limited MLO. The AP could then be provided with an MLD MAC (Medium Access Control) address, which can be used for establishing security keys to be used in the limited MLO. The MLD STA could then communicate with the AP on the basis of a MLD security mechanism using the security keys.

An example of a scenario where requesting and reporting of measurements based on the illustrated concepts may be utilized is when the AP is preparing to change to another channel. For example, if the AP detects that performance of its BSS is degrading, the AP may consider changing to another channel. A possible reason for such a performance degradation could be that the traffic in an overlapping BSS using the same channel has increased. As a result, there may be an increased likelihood that the channel used by the AP is found to be busy and, thus, an increased risk of failed access attempts to the channel. Further, even if the channel is found to be idle, there may be more interference on the channel, which may require utilization of a lower data rate. Before changing to another channel, the AP may utilize the reported measurements to determine whether there is new channel available that would improve the performance. By utilizing the measurements performed by STAs utilizing the MLO, the search for the new channel can be made without interrupting or otherwise compromising data traffic on the AP's operating channel.

The AP may request the STA(s) to perform the measurements on specific channels, or the AP may request the STA(s) to search for candidate channels to be used as a new operating channel of the AP and report the found candidate channels to the AP. Because of this possibility to utilize its associated STAs in the search, the search can be performed without impact on transmissions on the AP's operating channel, even if the AP itself does not support MLO.

Further, even if the AP itself supports MLO and could itself use the MLO operation to perform measurements without interrupting transmissions on its operating channel, it could still be beneficial for the AP to request MLO capable non-AP devices to perform measurements for scanning other channels. For example, the AP and the reporting STAs may experience quite different interference situations, and the measurements reported by the STAs may thus provide valuable extra information for selection of a new channel that has low interference also from the perspective of the STAs associated with the AP.

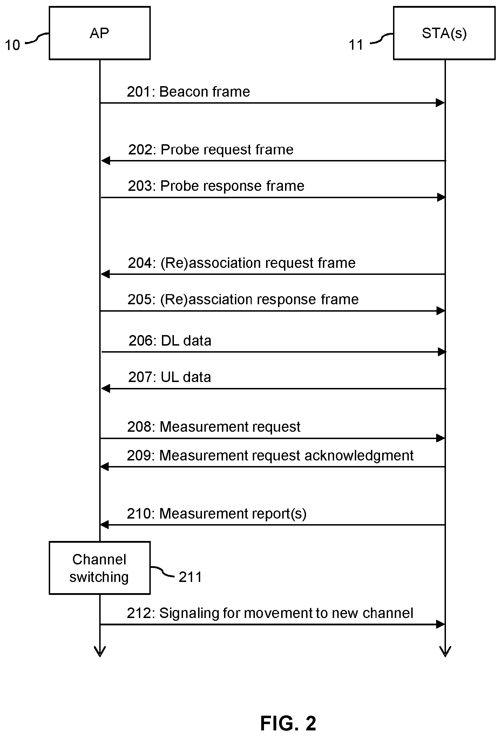

Fig. 2 shows an example of processes for requesting and reporting measurements according to the illustrated concepts. The processes of Fig. 2 involve an AP 10, e.g., corresponding to one of the APs 10 illustrated in Fig. 1, and one or more STAs, e.g., corresponding to one or more of the STAs 11 illustrated in Fig. 1.

In the processes of Fig. 1, the AP 10 may send a beacon frame 201 which is received by the STA(s). The beacon frame 201 may include an indication, e.g., in a capability element or in an operation element, which indicates limited MLO of the AP 10.

Additionally or alternatively, one or more of the STAs 11 may send a probe request frame 202 to the AP. The probe request frame 202 may include an indication, e.g., in a capability element or in an operation element, that indicate to the AP that the STA 11 sending the probe request frame 202 supports MLO. The indication may also provide further information related to the supported MLO, e.g., a number of supported simultaneous links, whether STR or NSTR MLO is supported, supported capabilities of each link, such as supported frequency bands, e.g., 2.4 GHz, 5 GHz, or 6 GHz, and/or supported bandwidth, e.g., 40 MHz, 80 MHz, 160 MHz, 80+80 MHz, or the like. In some scenarios, the STA may include the indication in response to receiving the beacon frame 201 from the AP 10 and the beacon frame 201 indicating limited MLO of the AP 10.

In response to the probe request frame 202, the AP 10 may send a probe response frame 203 to the STA 11. The probe response frame 203 may include an indication, e.g., in a capability element or in an operation element, which indicates limited MLO of the AP 10.

Additionally or alternatively, one or more of the STAs 11 may send an association or reassociation request frame 204 to the AP. The association or reassociation request frame 204 may include an indication, e.g., in a capability element or in an operation element, that indicate to the AP that the STA 11 sending the association or reassociation request frame 204 supports MLO. The indication may also provide further information related to the supported MLO, e.g., a number of supported simultaneous links, whether STR or NSTR MLO is supported, supported capabilities of each link, such as supported frequency bands, e.g., 2.4 GHz, 5 GHz, or 6 GHz, and/or supported bandwidth, e.g., 40 MHz, 80 MHz, 160 MHz, 80+80 MHz, or the like. In some scenarios, the STA may include the indication in response to receiving the beacon frame 201 from the AP 10 and the beacon frame 201 indicating limited MLO of the AP 10. In some scenarios, the STA may include the indication in response to receiving the probe response frame 203 from the AP 10 and the probe response frame 203 indicating limited MLO of the AP 10.

In response to the association or reassociation request frame 204, the AP 10 may send an association or reassociation response frame 205 to the STA 11. The association or reassociation response frame 205 may include an indication, e.g., in a capability element or in an operation element, which indicates limited MLO of the AP 10.

It is noted that the above-mentioned messages could also be transmitted in a different order. For example, it would also be possible that the exchange of the probe request frame 202 and probe response frame 203 occurs after the exchange of the association or reassociation request frame 204 and association or reassociation response frame 205, that transmission of the beacon frame is omitted, that there are multiple exchanges of an association or reassociation request frame and association or reassociation response frame, or that there are multiple exchanges of a probe request frame and probe response frame.

As further illustrated in Fig. 2, after association of at least one of the STAs 11 to the AP 10, the processes may also involve that the AP 10 sends DL data over its operating channel to the STA 11 or that the STA 11 sends UL data over the operating channel to the AP 10. Accordingly, the associated STA(s) can utilize the operating channel of the AP 10 to maintain a radio link to the AP 10.

At some point, the AP 10 may decide to request measurements from at least one of its associated STAs 11. This decision may be based on the STA's 11 MLO capabilities as indicated by the probe request frame 202 or the association or reassociation request frame 204. To request the measurements, the AP 10 sends a measurement request 208 to the STA(s) 11. The measurement request 208 may also indicate a type of the measurements to be performed, e.g., by indicating which quantity is to be measured or reported and/or on which channel(s) the measurements are to be performed. The quantities to be reported may for example include Beacon Report or Frame Report, indicating signal strength of a beacon or a frame, respectively, a Channel Load Report, indicating load on a channel in terms of a fraction of time in which the channel is busy, a Noise Histogram Report, indicating measured noise power and interference in terms of a histogram, a STA statistics report, indicating STA statistics, such as number of MSDUs received during a requested time interval, or a set of candidate channels for selection of a new operating channel of the AP 10.

As further illustrated, in response to the measurement request 208, the STA 11 may return a measurement request acknowledgement 209, indicating that the STA 11 accepted to perform the requested measurements. Alternatively, the STA 11 could also indicate refusal to perform the requested measurements.

In the example of Fig. 2, it is however assumed that the STA 11 accepts the measurement request 208 and, at some point, sends at least one measurement report 210 to the AP 10, which represents at least one measurement quantity as specified by the measurement request 208.

In the example of Fig. 2, it is further assumed that the AP 10 utilizes the information provided by the received measurement report(s) to control channel switching to a new operating channel of the AP 10, as indicated by block 211. This may also involve that the AP 10 performs signaling 212 for moving its associated STAs to the new operating channel.

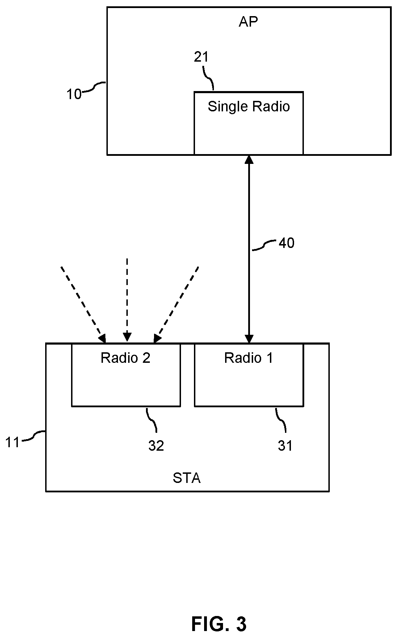

Fig. 3 schematically illustrates measurements based on the limited MLO according to the illustrated concepts. Specifically, Fig. 3 illustrates an AP 10, e.g., corresponding to one of the APs 10 of Fig. 1 or to the AP 10 of Fig. 2, and a STA, e.g., corresponding to one of the STAs 11 of Fig. 1 or Fig. 2. In the example of Fig. 3, it is assumed that the AP 10 is equipped with a single radio 21. Alternatively, the AP 10 could also be equipped with multiple radios, which are however not utilized in the functionalities illustrated in Fig. 3. The STA 11 is in turn equipped with multiple radios, in particular a first radio 31 and a second radio 32. The radio 21 of the AP 10 and the first radio 31 of the STA 11 are used for maintaining a radio link 40 between the AP 10 and the STA 11. For this purpose, the first radio is tuned to the AP's 19 operating channel. At the same time, the STA's 11 second radio 32 is available for performing measurements on another channel, as requested by the AP 10.

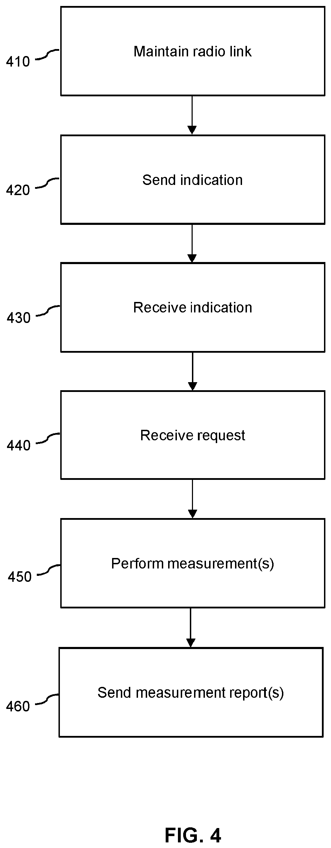

Fig. 4 shows a flowchart for illustrating a method, which may be utilized for implementing the illustrated concepts. The method of Fig. 4 may be used for implementing the illustrated concepts in a wireless communication device operated in a wireless communication system. The wireless communication system may be based on a WLAN technology, e.g., according to the IEEE 802.11 standards family. The wireless communication device may for example correspond to a STA associated to an AP of the wireless communication system, e.g., to any of the above-mentioned STAs 11.

If a processor-based implementation of the wireless communication device is used, at least some of the steps of the method of Fig. 4 may be performed and/or controlled by one or more processors of the wireless communication device. Such wireless communication device may also include a memory storing program code for implementing at least some of the below described functionalities or steps of the method of Fig. 4.

At step 410, the wireless communication device maintains, on a first channel, a radio link to a further wireless communication device. The wireless communication device may for example correspond to a STA, and the further wireless communication device may correspond to an AP to which the STA is associated, e.g., to any of the above-mentioned APs 10. For establishing the radio link, the STA may have discovered the AP, e.g., based on exchange of beacon frames, probe request frames, or probe response frames, and joined a BSS of the AP, e.g., based on exchange of association or reassociation request and association or reassociation response frames. The further wireless communication device does not support MLO.

At step 420, the wireless communication device sends, to the further wireless communication device, an indication that the wireless communication device supports MLO. In some scenarios, the wireless communication device sends the indication in a probe request frame.

Alternatively or in addition, the wireless communication device may send the indication in an association request frame. In some cases, the association request frame may be a reassociation request frame. The probe request frame, the association request frame or the reassociation request frame may be sent during establishment of the first radio link, e.g., as explained in connection with step 410.

At step 430, the wireless communication device may receive, from the further wireless communication device, a further indication that the further wireless communication device supports cooperation with a wireless communication device utilizing MLO for communication on one channel and performing measurements on another channel. The above-mentioned indication of limited MLO of an AP is an example of such indication. The wireless communication device may receive the further indication in a probe response frame. Alternatively or in addition, the wireless communication device may receive the further indication in an association response frame. In some cases, the association response frame may be a reassociation response frame. Alternatively or in addition, the wireless communication device may receive the further indication in a beacon frame. The beacon frame, the probe response frame, the association response frame, or reassociation response frame may be received during establishment of the first radio link, e.g., as explained in connection with step 410.

It is noted that steps 410, 420 and 430 may be performed in various orders and that in some scenarios the wireless device may send the indication of step 430 in response to receiving the further indication of step 430. Similarly, the wireless communication device could receive the further indication of step 430 in response to sending the indication of step 420.

At step 440, the wireless communication device receives a request from the further wireless communication device. The above-mentioned measurement request 208 is an example of such request.

At step 450, in response to the request received at step 440, the wireless communication device utilizes the MLO to perform at least one measurement on a second channel while maintaining the radio link to the further wireless communication device, e.g., utilizing a configuration as illustrated in Fig. 3.

At step 460, the wireless communication device sends, to the further wireless communication device, one or more measurement reports representing the at least one measurement performed at step 450. The wireless communication device may send the measurement report via the maintained radio link.

The one or more measurement reports may for example include at least one measurement report representing a measured signal strength associated with one or more received frames, e.g., in terms of an RSSI (Received Signal Strength Indicator). Alternatively or in addition, the one or more measurement reports may include at least one measurement report representing a load on the second channel, e.g., in terms of a fraction of time in which the channel is busy. Alternatively or in addition, the one or more measurement reports may include at least one measurement report representing noise power on the second channel, e.g., in terms of a histogram and/or based on an Idle Power Indicator (IPI). Alternatively or in addition, the one or more measurement reports may include at least one measurement report indicating a number of frames received per time interval., e.g., a number of received MSDUs. Alternatively or in addition, the one or more measurement reports may include at least one measurement report indicating a candidate set of channels for selection of a new operating channel of the wireless communication device.

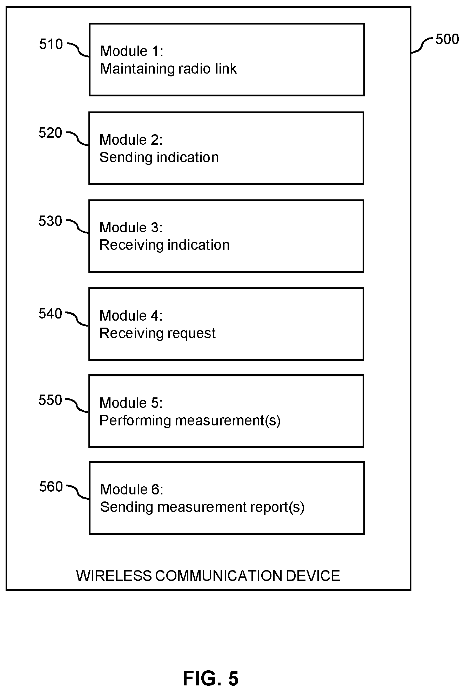

Fig. 5 shows a block diagram for illustrating functionalities of a wireless communication device 500 which operates according to the method of Fig. 4. The wireless communication device 500 may for example correspond to one of above-mentioned STAs 11. As illustrated, the wireless communication device 500 may be provided with a module 510 configured to maintain, on a first channel, a radio link to a further wireless communication device, such as explained in connection with step 410. Further, the wireless communication device 500 may be provided with a module 520 configured to send an indication of MLO support to the further wireless communication device, such as explained in connection with step 420. Further, the wireless communication device 500 may be provided with a module 530 configured to receive an indication from the further wireless communication device, such as explained in connection with step 440. Further, the wireless communication device 500 may be provided with a module 540 configured to receive a request from the further wireless communication device, such as explained in connection with step 440. Further, the wireless communication device 500 may be provided with a module 550 configured to utilize MLO for performing at least one measurement while maintaining the radio link, such as explained in connection with step 450. Further, the wireless communication device 500 may be provided with a module 560 configured to send one or more measurement reports, such as explained in connection with step 560.

It is noted that the wireless communication device 500 may include further modules for implementing other functionalities, such as known functionalities of a WLAN STA. Further, it is noted that the modules of the wireless communication device 500 do not necessarily represent a hardware structure of the wireless communication device 500, but may also correspond to functional elements, e.g., implemented by hardware, software, or a combination thereof.

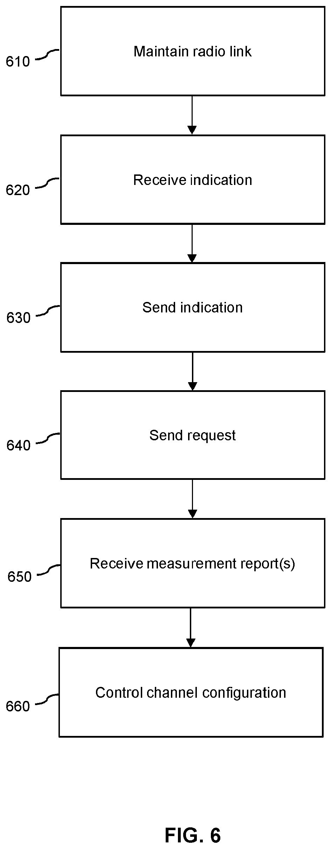

Fig. 6 shows a flowchart for illustrating a method, which may be utilized for implementing the illustrated concepts. The method of Fig. 6 may be used for implementing the illustrated concepts in a wireless communication device operated in a wireless communication system. The wireless communication system may be based on a WLAN technology, e.g., according to the IEEE 802.11 standards family. The wireless communication device may for example correspond to an AP, e.g., to any of the above-mentioned APs 10.

If a processor-based implementation of the wireless communication device is used, at least some of the steps of the method of Fig. 6 may be performed and/or controlled by one or more processors of the wireless communication device. Such wireless communication device may also include a memory storing program code for implementing at least some of the below described functionalities or steps of the method of Fig. 6.

At step 610, the wireless communication device maintains, on a first channel, a radio link to at least one further wireless communication device. The wireless communication device may for example correspond to an AP, and the at least one further wireless communication device may correspond to a STA associated to the AP, e.g., to any of the above-mentioned STAs 11. For establishing the radio link, the STA may have discovered the AP, e.g., based on exchange of beacon frames, probe request frames, or probe response frames, and joined a BSS of the AP, e.g., based on exchange of association or reassociation request and association or reassociation response frames. The wireless communication device does not support MLO.

At step 620, the wireless communication device receives, from the at least one further wireless communication device, an indication that the at least one further wireless communication device supports MLO. In some scenarios, the wireless communication device receives the indication in a probe request frame. Alternatively or in addition, the wireless communication device may receive the indication in an association request frame. In some cases, the association request frame may be a reassociation request frame. The probe request frame, the association request frame or the reassociation request frame may be received during establishment of the first radio link, e.g., as explained in connection with step 610.

At step 630, the wireless communication device may send, to the at least one further wireless communication device, a further indication that the wireless communication device supports cooperation with a further wireless communication device utilizing MLO for communication on one channel and performing measurements on another channel. The above-mentioned indication of limited MLO of an AP is an example of such indication. The wireless communication device may send the further indication in a probe response frame. Alternatively or in addition, the wireless communication device may send the further indication in an association response frame. In some cases, the association response frame may be a reassociation response frame. Alternatively or in addition, the wireless communication device may send the further indication in a beacon frame. The beacon frame, the probe response frame, the association response frame, or reassociation response frame may be sent during establishment of the first radio link, e.g., as explained in connection with step 610.

It is noted that steps 610, 620, and 630 may be performed in various orders and that in some scenarios the wireless device may receive the indication of step 620 in response to sending the further indication of step 630. Similarly, the wireless communication device could send the further indication of step 630 in response to receiving the indication of step 620.

At step 640, the wireless communication device sends, to the at least one further wireless communication device, a request to utilize the MLO to perform at least one measurement on a second channel while maintaining the radio link to the further wireless communication device, e.g., utilizing a configuration as illustrated in Fig. 3. The above-mentioned measurement request 208 is an example of such request.

At step 650, in response to the request sent at step 640, the wireless communication device receives, from the at least one further wireless communication device, one or more measurement reports representing the at least one measurement requested at step 640. The wireless communication device may receive the at least one measurement report via the maintained radio link.

The one or more measurement reports may for example include at least one measurement report representing a measured signal strength associated with one or more received frames, e.g., in terms of an RSSI. Alternatively or in addition, the one or more measurement reports may include at least one measurement report representing a load on the second channel, e.g., in terms of a fraction of time in which the channel is busy. Alternatively or in addition, the one or more measurement reports may include at least one measurement report representing noise power on the second channel, e.g., in terms of a histogram and/or based on an Idle Power Indicator (IPI). Alternatively or in addition, the one or more measurement reports may include at least one measurement report indicating a number of frames received per time interval., e.g., a number of received MSDUs per second. Alternatively or in addition, the one or more measurement reports may include at least one measurement report indicating a candidate set of channels for selection of a new operating channel of the wireless communication device.

At step 660, the wireless communication device may control configuration of the radio link depending on the one or more measurement reports received at step 650. For example, based on the received one or more measurement reports, the wireless communication device may control switching of communication operation to the second channel. Accordingly, based on the received one or more measurement reports, the wireless communication device may select the second channel as new operating channel of the wireless communication device.

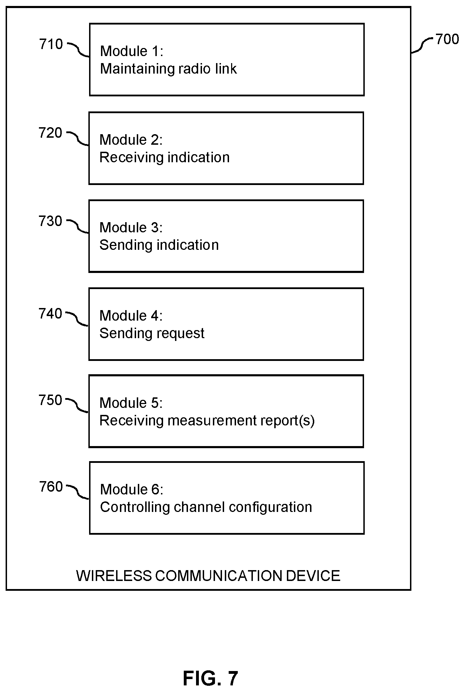

Fig. 7 shows a block diagram for illustrating functionalities of a wireless communication device 700 which operates according to the method of Fig. 6. The wireless communication device 700 may for example correspond to one of the above-mentioned APs 10. As illustrated, the wireless communication device 700 may be provided with a module 710 configured to maintain, on a first channel, a radio link to at least one further wireless communication device, such as explained in connection with step 610. Further, the wireless communication device 700 may be provided with a module 720 configured to receive an indication of MLO support from the at least one further wireless communication device, such as explained in connection with step 620. Further, the wireless communication device 700 may be provided with a module 730 configured to send an indication to the at least one further wireless communication device, such as explained in connection with step 630. Further, the wireless communication device 700 may be provided with a module 740 configured to send a request to perform at least one measurement to the at least one further wireless communication device, such as explained in connection with step 640. Further, the wireless communication device 700 may be provided with a module 750 configured to receive one or more measurement, such as explained in connection with step 650. Further, the wireless communication device 700 may be provided with a module 760 configured to control configuration of the radio link, such as explained in connection with step 660.

It is noted that the wireless communication device 700 may include further modules for implementing other functionalities, such as known functionalities of a WLAN AP. Further, it is noted that the modules of the wireless communication device 700 do not necessarily represent a hardware structure of the wireless communication device 700, but may also correspond to functional elements, e.g., implemented by hardware, software, or a combination thereof.

It is noted that the functionalities as described in connection with Figs. 4 to 7 could also be implemented in a system, e.g., a system including a first wireless communication device operating according to the method of Fig. 4 and a second wireless communication device, which corresponds to the further wireless communication device in the method of Fig. 4 and operates according to the method of Fig. 6.

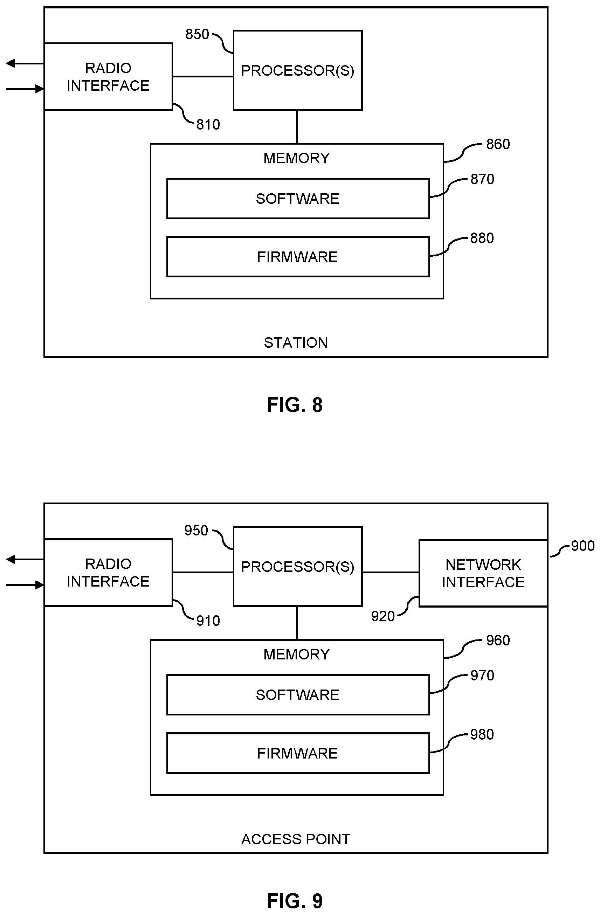

As examples of structures for implementing the above-mentioned wireless communication devices, Fig. 8 illustrates structures for implementing a STA, e.g., corresponding to any of the above-mentioned STAs 11, and Fig. 9 illustrates structures for implementing an AP, e.g., corresponding to any of the above-mentioned APs 10.

Fig. 8 illustrates a processor-based implementation of a STA 800 which may be used for implementing the above-described concepts. For example, the structures as illustrated in Fig. 8 may be used for implementing the concepts in any of the above-mentioned STAs 11.

As illustrated, the STA 800 includes one or more radio interfaces 810. The radio interface(s) 810 may for example be based on a WLAN technology, e.g., according to an IEEE 802.11 family standard. However, other wireless technologies could be supported as well, e.g., the LTE technology or the NR technology. In some scenarios, the radio interface(s) 810 may be based on multiple radios to support MLO operation of the STA 800.

Further, the STA 800 may include one or more processors 850 coupled to the radio interface(s) 810 and a memory 860 coupled to the processor(s) 850. By way of example, the radio interface(s) 810, the processor(s) 850, and the memory 860 could be coupled by one or more internal bus systems of the STA 800. The memory 860 may include a Read-Only-Memory (ROM), e.g., a flash ROM, a Random Access Memory (RAM), e.g., a Dynamic RAM (DRAM) or Static RAM (SRAM), a mass storage, e.g., a hard disk or solid state disk, or the like. As illustrated, the memory 860 may include software 870 and/or firmware 880. The memory 860 may include suitably configured program code to be executed by the processor(s) 850 so as to implement the above-described functionalities for controlling wireless transmissions, such as explained in connection with Figs. 4 to 7.

It is to be understood that the structures as illustrated in Fig. 8 are merely schematic and that the STA 800 may actually include further components which, for the sake of clarity, have not been illustrated, e.g., further interfaces or further processors. Also, it is to be understood that the memory 860 may include further program code for implementing known functionalities of a WLAN STA. According to some embodiments, also a computer program may be provided for implementing functionalities of the STA 800, e.g., in the form of a physical medium storing the program code and/or other data to be stored in the memory 860 or by making the program code available for download or by streaming.

Fig. 9 illustrates a processor-based implementation of an AP 900 which may be used for implementing the above-described concepts. For example, the structures as illustrated in Fig. 9 may be used for implementing the concepts in any of the above-mentioned APs 10.

As illustrated, the AP 900 includes one or more radio interfaces 910. The radio interface(s) 910 may for example be based on a WLAN technology, e.g., according to an IEEE 802.11 family standard. However, other wireless technologies could be supported as well, e.g., the LTE technology or the NR technology. In some scenarios, the radio interface(s) 910 may be based on multiple radios to support MLO operation of the AP 900. As further illustrated, the AP 900 may also include one or more network interfaces 920 which may be used for communication with other nodes of a wireless communication network, e.g., with other APs or with an application service platform as illustrated in Fig. 1.

Further, the AP 900 may include one or more processors 950 coupled to the interface(s) 910, 920 and a memory 960 coupled to the processor(s) 950. By way of example, the interface(s) 910, 920 the processor(s) 950, and the memory 960 could be coupled by one or more internal bus systems of the AP 900. The memory 960 may include a ROM, e.g., a flash ROM, a RAM, e.g., a DRAM or SRAM, a mass storage, e.g., a hard disk or solid state disk, or the like. As illustrated, the memory 960 may include software 970 and/or firmware 980. The memory 960 may include suitably configured program code to be executed by the processor(s) 950 so as to implement the above-described functionalities for controlling wireless transmissions, such as explained in connection with Figs. 4 to 7.

It is to be understood that the structures as illustrated in Fig. 9 are merely schematic and that the AP 900 may actually include further components which, for the sake of clarity, have not been illustrated, e.g., further interfaces or further processors. Also, it is to be understood that the memory 960 may include further program code for implementing known functionalities of a WLAN AP. According to some embodiments, also a computer program may be provided for implementing functionalities of the AP 900, e.g., in the form of a physical medium storing the program code and/or other data to be stored in the memory 960 or by making the program code available for download or by streaming.

As can be seen, the concepts as described above may be used for efficiently performing and reporting measurements in a wireless communication system. In particular, one wireless communication device may benefit from MLO capabilities of another wireless communication device by requesting the measurements from the other wireless communication device, which are performed by utilizing MLO to maintain a radio link on one channel, while performing measurements on another channel. In this way, an AP can for example take advantage of the MLO capabilities of its associated MLDs to collect measurements performed by the MLDs. Since adverse effects on the MLDs existing radio links can be avoided, there is low risk that measurement requests to the MLDs are rejected. Further, the MLDs may scan the medium faster than non-MLDs. For example, an MLD may perform simultaneous measurements in an operating channel and in a non-operating channel, or may perform simultaneous measurements in two non-operating channels. Thus, the AP may receive desired measurement reports quickly and with low overhead. Occupancy of the medium by measurement requests and responses can be reduced. Further, the illustrated concepts may be implemented in various wireless communication technologies, including the IEEE 801.11be technology and technologies based on earlier members of the IEEE 802.11 standards family, e.g., based in the IEEE 802.11ac/ax technology. On the AP side, such implementation could be accomplished without requiring hardware modification, e.g., by means of software upgrades. Further, an AP could operate on a single link even if it supports MLO, and the illustrated concepts could enable such AP to exploit the MLO capabilities of its associated STAs.

It is to be understood that the examples and embodiments as explained above are merely illustrative and susceptible to various modifications. For example, the illustrated concepts may be applied in connection with various kinds of wireless technologies, without limitation to WLAN technologies. Further, the concepts may be applied with respect to various types of APs and STAs. Further, the illustrated concepts may be applied to various combinations of channels and channels from various frequency bands.

Moreover, it is to be understood that the above concepts may be implemented by using correspondingly designed software to be executed by one or more processors of an existing device or apparatus, or by using dedicated device hardware. Further, it should be noted that the illustrated apparatuses or devices may each be implemented as a single device or as a system of multiple interacting devices or modules.

## Claims

1. A method of controlling wireless transmissions in a wireless communication system, the method comprising:
on a first channel, a wireless communication device (11; 500; 800) maintaining a radio link (40) to a further wireless communication device (10; 700; 900) which does not support multi-link operation;
the wireless communication device (11; 500; 800) sending to the further wireless communication device (10; 700; 900) an indication that the wireless communication device supports multi-link operation;
the wireless communication device (11; 500; 800) receiving from the further wireless communication device (10; 700; 900) a request (208) to utilize the multi-link operation to perform at least one measurement on a second channel while maintaining the radio link (40) to the further wireless communication device (10; 700; 900);
in response to the request (208), the wireless communication device (11; 500; 800) utilizing the multi-link operation to perform at least one measurement on the second channel while maintaining the radio link (40) to the further wireless communication device; and
the wireless communication device (11; 500; 800) sending to the further wireless communication device (10; 700; 900) one or more measurement reports (210) representing the at least one measurement.

2. The method according to claim 1,
wherein the wireless communication device (11; 500; 800) sends the indication in a probe request frame (202) and/or in an association request frame (204).

3. The method according to claim 1 or 2, comprising:
the wireless communication device (11; 500; 800) receiving from the further wireless communication device (10; 700; 900) a further indication that the further wireless communication device (10; 700; 900) supports cooperation with a wireless communication device utilizing multi-link operation for communication on one channel and performing measurements on another channel,
wherein the wireless communication device (11; 500; 800) receives the further indication in a probe response frame (203), in an association response frame (205), and/or in a beacon frame (201).

4. The method according to any one of the preceding claims,
wherein the one or more measurement reports (210) comprise at least one measurement report representing a measured signal strength associated with one or more received frames, at least one measurement report representing a load on the second channel, at least one measurement report representing noise power on the second channel, at least one measurement report representing interference power on the second channel, at least one measurement report indicating a number of frames received per time interval, and/or at least one measurement report indicating a candidate set of channels for selection of a new operating channel of the further wireless communication device (10; 700; 900).

5. The method according to any one of the preceding claims,
wherein the wireless communication system is based on a Wireless Local Area Network technology according to the IEEE 802.11 standards family.

6. The method according to claim 5,
wherein the further wireless communication device (10; 700; 900) is an access point of the wireless communication system and the wireless communication device (11; 500; 800) is a station served by the access point.

7. A method of controlling wireless transmissions in a wireless communication system, the method comprising:
on a first channel, a wireless communication device (10; 700; 900), which does not support multi-link operation, maintaining a radio link (40) to at least one further wireless communication device (11; 500; 800);
the wireless communication device (10; 700; 900) receiving from the at least one further wireless communication device (11; 500; 800) an indication that the further wireless communication device (11; 500; 800) supports multi-link operation;
the wireless communication device(10; 700; 900) sending to the at least one further wireless communication device (11; 500; 800) a request to utilize the multi-link operation to perform at least one measurement on a second channel while maintaining the radio link (40) to the wireless communication device (10; 700; 900); and
the wireless communication device (10; 700; 900) receiving from the at least one further wireless communication device (11; 500; 800) one or more measurement reports (210) representing the at least one measurement.

8. The method according to claim 7,
wherein the wireless communication device (10; 700; 900) receives the indication in a probe request frame (202) and/or in an association request frame (204).

9. The method according to claim 7 or 8, comprising:
the wireless communication device (10; 700; 900) sending to the at least one further wireless communication device (11; 500; 800) a further indication that the wireless communication device (10; 700; 900) supports cooperation with a further wireless communication device utilizing multi-link operation for communication on one channel and performing measurements on another channel,
wherein the wireless communication device (10; 700; 900) sends the further indication in a probe response frame (203), in an association response frame (205), and/or in a beacon frame (201).

10. The method according to any one of claims 7 to 9,
wherein the one or more measurement reports (210) comprise at least one measurement report representing a measured signal strength associated with one or more received frames, at least one measurement report representing a load on the second channel, at least one measurement report representing noise power on the second channel, at least one measurement report representing interference power on the second channel, at least one measurement report indicating a number of frames received per time interval, and/or at least one measurement report indicating a candidate set of channels for selection of a new operating channel of the wireless communication device (10; 700; 900).

11. The method according to any one of claims 7 to 10, comprising:
based on the received one or more measurement reports, the wireless communication device (10; 700; 900) controlling switching of communication operation to the second channel.

12. The method according to any one of claims 7 to 11,
wherein the wireless communication system is based on a Wireless Local Area Network technology according to the IEEE 802.11 standards family.

13. The method according to claim 12,
wherein the wireless communication device (10; 700; 900) is an access point of the wireless communication system and the at least one further wireless communication device (11; 500; 800) is a station served by the access point.

14. A wireless communication device (11; 500; 800), wherein the wireless communication device (11; 500; 800) is configured to:
on a first channel, maintain a radio link (40) to a further wireless communication device (10; 700; 900) which does not support multi-link operation;
send to the further wireless communication device (10; 700; 900) an indication that the wireless communication device supports multi-link operation;
receive from the further wireless communication device (10; 700; 900) a request (208) to utilize the multi-link operation to perform at least one measurement on a second channel while maintaining the radio link (40) to the further wireless communication device (10; 700; 900);
in response to the request (208), utilize the multi-link operation to perform at least one measurement on the second channel while maintaining the radio link (40) to the further wireless communication device (10; 700; 900); and
send to the further wireless communication device (10; 700; 900) one or more measurement reports representing the at least one measurement.

15. The wireless communication device (11; 500; 800) according to claim 14,
wherein the wireless communication device (11; 500; 800) is configured to perform a method according to any one of claims 2 to 6.

16. A wireless communication device (10; 700; 900), wherein the wireless communication device (10; 700; 900) does not support multi-link operation and is configured to:
on a first channel, maintain a radio link (40) to at least one further wireless communication device (11; 500; 800);
receive from the at least one further wireless communication device (11; 500; 800) an indication that the further wireless communication device (11; 500; 800) supports multi-link operation;
send to the at least one further wireless communication device (11; 500; 800) a request (208) to utilize the multi-link operation to perform at least one measurement on a second channel while maintaining the radio link (40) to the wireless communication device; and
receive from the at least one further wireless communication device (11; 500; 800) one or more measurement reports (210) representing the at least one measurement..

17. The wireless communication device (10; 700; 900) according to claim 16,
wherein the wireless communication device (10; 700; 900) is configured to perform a method according to any one of claims 8 to 13.

18. A computer program or computer program product comprising program code to be executed by at least one processor (850) of a wireless communication device (11; 500; 800), whereby execution of the program code causes the wireless communication device (11; 500; 800) to perform a method according to any one of claims 1 to 6.

19. A computer program or computer program product comprising program code to be executed by at least one processor (850; 950) of a wireless communication device (10; 700; 900), whereby execution of the program code causes the wireless communication device (10; 700; 900) to perform a method according to any one of claims 7 to 13.

## Patentansprüche

1. Verfahren zum Steuern von drahtlosen Übertragungen in einem drahtlosen Kommunikationssystem, wobei das Verfahren umfasst:
Aufrechterhalten auf einem ersten Kanal, durch eine drahtlose Kommunikationsvorrichtung (11; 500; 800), einer Funkverbindung (40) mit einer weiteren drahtlosen Kommunikationsvorrichtung (10; 700; 900), die keinen Mehrverbindungsbetrieb unterstützt;
wobei die drahtlose Kommunikationsvorrichtung (11; 500; 800) an die weitere drahtlose Kommunikationsvorrichtung (10; 700; 900) eine Angabe sendet, dass die drahtlose Kommunikationsvorrichtung einen Mehrverbindungsbetrieb unterstützt;
wobei die drahtlose Kommunikationsvorrichtung (11; 500; 800) von der weiteren drahtlosen Kommunikationsvorrichtung (10; 700; 900) eine Anfrage (208) empfängt, den Mehrverbindungsbetrieb zu verwenden, um mindestens eine Messung auf einem zweiten Kanal vorzunehmen, während die Funkverbindung (40) mit der weiteren drahtlosen Kommunikationsvorrichtung (10; 700; 900) aufrechterhalten wird;
als Reaktion auf die Anfrage (208), Verwenden, durch die drahtlose Kommunikationsvorrichtung (11; 500; 800), des Mehrverbindungsbetriebs, um mindestens eine Messung auf dem zweiten Kanal vorzunehmen, während die Funkverbindung (40) mit der weiteren drahtlosen Kommunikationsvorrichtung aufrechterhalten wird; und
wobei die drahtlose Kommunikationsvorrichtung (11; 500; 800) an die weitere drahtlose Kommunikationsvorrichtung (10; 700; 900) einen oder mehrere Messberichte (210), welche die mindestens eine Messung darstellen, sendet.

2. Verfahren nach Anspruch 1, wobei die drahtlose Kommunikationsvorrichtung (11; 500; 800) die Angabe in einem Sondenanfrage-Frame (202) und/oder in einem Zuordnungsanfrage-Frame (204) sendet.

3. Verfahren nach Anspruch 1 oder 2, umfassend:
Empfangen, durch die drahtlose Kommunikationsvorrichtung (11; 500; 800), von der weiteren drahtlosen Kommunikationsvorrichtung (10; 700; 900) einer weiteren Angabe, dass die weitere drahtlose Kommunikationsvorrichtung (10; 700; 900) die Zusammenarbeit mit einer drahtlosen Kommunikationsvorrichtung unterstützt, die einen Mehrverbindungsbetrieb zur Kommunikation auf einem Kanal verwendet und Messungen auf einem anderen Kanal vornimmt,
wobei die drahtlose Kommunikationsvorrichtung (11; 500; 800) die weitere Angabe in einem Sondenantwort-Frame (203), in einem Zuordnungsantwort-Frame (205) und/oder in einem Baken-Frame (201) empfängt.

4. Verfahren nach einem der vorhergehenden Ansprüche, wobei der eine oder die mehreren Messberichte (210) mindestens einen Messbericht umfassen, der eine gemessene Signalstärke darstellt, die dem einem oder den mehreren empfangenen Frames zugeordnet ist, wobei mindestens ein Messbericht eine Last auf dem zweiten Kanal darstellt, wobei mindestens ein Messbericht eine Rauschleistung auf dem zweiten Kanal darstellt, wobei mindestens ein Messbericht eine Interferenzleistung auf dem zweiten Kanal darstellt, wobei mindestens ein Messbericht eine Anzahl von Frames angibt, die pro Zeitintervall empfangen werden, und/oder mindestens ein Messbericht eine mögliche Reihe von Kanälen zur Auswahl eines neuen Betriebskanals der weiteren drahtlosen Kommunikationsvorrichtung (10; 700; 900) angibt.

5. Verfahren nach einem der vorhergehenden Ansprüche, wobei das drahtlose Kommunikationssystem auf einer lokalen Netzwerktechnologie gemäß der Normenfamilie IEEE 802.11 basiert.

6. Verfahren nach Anspruch 5, wobei die weitere drahtlose Kommunikationsvorrichtung (10; 700; 900) ein Zugriffspunkt des drahtlosen Kommunikationssystems ist und die drahtlose Kommunikationsvorrichtung (11; 500; 800) eine Station ist, die von dem Zugriffspunkt bedient wird.

7. Verfahren zum Steuern von drahtlosen Übertragungen in einem drahtlosen Kommunikationssystem, wobei das Verfahren umfasst:
auf einem ersten Kanal, Aufrechterhalten, durch eine drahtlose Kommunikationsvorrichtung (10; 700; 900), die keinen Mehrverbindungsbetrieb unterstützt, einer Funkverbindung (40) mit mindestens einer weiteren drahtlosen Kommunikationsvorrichtung (11; 500; 800);
Empfangen, durch die drahtlose Kommunikationsvorrichtung (10; 700; 900), von der mindestens einen weiteren drahtlosen Kommunikationsvorrichtung (11; 500; 800) einer Angabe, dass die weitere drahtlose Kommunikationsvorrichtung (11; 500; 800) einen Mehrverbindungsbetrieb unterstützt;
Senden, durch die drahtlose Kommunikationsvorrichtung(10; 700; 900), an die mindestens eine weitere drahtlose Kommunikationsvorrichtung (11; 500; 800) einer Anfrage, den Mehrverbindungsbetrieb zu verwenden, um mindestens eine Messung auf einem zweiten Kanal vorzunehmen, während die Funkverbindung (40) mit der drahtlosen Kommunikationsvorrichtung (10; 700; 900) aufrechterhalten wird; und
Empfangen, durch die drahtlose Kommunikationsvorrichtung (10; 700; 900), von der mindestens einen weiteren drahtlosen Kommunikationsvorrichtung (11; 500; 800) eines oder mehrerer Messberichte (210), welche die mindestens eine Messung darstellen.

8. Verfahren nach Anspruch 7, wobei die drahtlose Kommunikationsvorrichtung (10; 700; 900) die Angabe in einem Sondenanfrage-Frame (202) und/oder in einem Zuordnungsanfrage-Frame (204) empfängt.

9. Verfahren nach Anspruch 7 oder 8, umfassend:
Senden, durch die drahtlose Kommunikationsvorrichtung (10; 700; 900), an die mindestens eine weitere drahtlose Kommunikationsvorrichtung (11; 500; 800) einer weiteren Angabe, dass die drahtlose Kommunikationsvorrichtung (10; 700; 900) eine Zusammenarbeit mit einer weiteren drahtlosen Kommunikationsvorrichtung unterstützt, die einen Mehrverbindungsbetrieb zur Kommunikation auf einem Kanal verwendet und Messungen auf einem anderen Kanal vornimmt,
wobei die drahtlose Kommunikationsvorrichtung (10; 700; 900) die weitere Angabe in einem Sondenantwort-Frame (203), in einem Zuordnungsantwort-Frame (205) und/oder in einem Baken-Frame (201) sendet.

10. Verfahren nach einem der Ansprüche 7 bis 9, wobei der eine oder die mehreren Messberichte (210) mindestens einen Messbericht umfassen, der eine gemessene Signalstärke darstellt, die einem oder mehreren empfangenen Frames zugeordnet ist, wobei mindestens ein Messbericht eine Last auf dem zweiten Kanal darstellt, wobei mindestens ein Messbericht eine Rauschleistung auf dem zweiten Kanal darstellt, wobei mindestens ein Messbericht eine Interferenzleistung auf dem zweiten Kanal darstellt, wobei mindestens ein Messbericht eine Anzahl von Frames angibt, die pro Zeitintervall empfangen werden, und/oder mindestens ein Messbericht eine mögliche Reihe von Kanälen zur Auswahl eines neuen Betriebskanals der drahtlosen Kommunikationsvorrichtung (10; 700; 900) angibt.

11. Verfahren nach einem der Ansprüche 7 bis 10, umfassend:
basierend auf dem einen oder den mehreren empfangenen Messberichten, Steuern, durch die drahtlose Kommunikationsvorrichtung (10; 700; 900), des Umschaltens des Kommunikationsbetriebs auf den zweiten Kanal.

12. Verfahren nach einem der Ansprüche 7 bis 11, wobei das drahtlose Kommunikationssystem auf einer lokalen Netzwerktechnologie gemäß der Normenfamilie IEEE 802.11 basiert.

13. Verfahren nach Anspruch 12, wobei die drahtlose Kommunikationsvorrichtung (10; 700; 900) ein Zugriffspunkt des drahtlosen Kommunikationssystems ist, und die mindestens eine weitere drahtlose Kommunikationsvorrichtung (11; 500; 800) eine Station ist, die von dem Zugriffspunkt bedient wird.

14. Drahtlose Kommunikationsvorrichtung (11; 500; 800), wobei die drahtlose Kommunikationsvorrichtung (11; 500; 800) konfiguriert ist zum:
Aufrechterhalten, auf einem ersten Kanal, einer Funkverbindung (40) mit einer weiteren drahtlosen Kommunikationsvorrichtung (10; 700; 900), die keinen Mehrverbindungsbetrieb unterstützt;
Senden, an die weitere drahtlose Kommunikationsvorrichtung (10; 700; 900), einer Angabe, dass die drahtlose Kommunikationsvorrichtung einen Mehrverbindungsbetrieb unterstützt;
Empfangen, von der weiteren drahtlosen Kommunikationsvorrichtung (10; 700; 900), einer Anfrage (208), den Mehrverbindungsbetrieb zu verwenden, um mindestens eine Messung auf einem zweiten Kanal vorzunehmen, während die Funkverbindung (40) mit der weiteren drahtlosen Kommunikationsvorrichtung (10; 700; 900) aufrechterhalten wird;
als Reaktion auf die Anfrage (208), Verwenden des Mehrverbindungsbetriebs, um mindestens eine Messung auf dem zweiten Kanal vorzunehmen, während die Funkverbindung (40) mit der weiteren drahtlosen Kommunikationsvorrichtung (10; 700; 900) aufrechterhalten wird; und
Senden, an die weitere drahtlose Kommunikationsvorrichtung (10; 700; 900), eines oder mehrerer Messberichte, welche die mindestens eine Messung darstellen.

15. Drahtlose Kommunikationsvorrichtung (11; 500; 800) nach Anspruch 14, wobei die drahtlose Kommunikationsvorrichtung (11; 500; 800) dazu konfiguriert ist, ein Verfahren nach einem der Ansprüche 2 bis 6 auszuführen.

16. Drahtlose Kommunikationsvorrichtung (10; 700; 900), wobei die drahtlose Kommunikationsvorrichtung (10; 700; 900) keinen Mehrverbindungsbetrieb unterstützt und konfiguriert ist zum:
Aufrechterhalten, auf einem ersten Kanal, einer Funkverbindung (40) mit mindestens einer weiteren drahtlosen Kommunikationsvorrichtung (11; 500; 800);
Empfangen, von der mindestens einen weiteren drahtlosen Kommunikationsvorrichtung (11; 500; 800), einer Angabe, dass die weitere drahtlose Kommunikationsvorrichtung (11; 500; 800) einen Mehrverbindungsbetrieb unterstützt;
Senden, an die mindestens eine weitere drahtlose Kommunikationsvorrichtung (11; 500; 800), einer Anfrage (208), den Mehrverbindungsbetrieb zu verwenden, um mindestens eine Messung auf einem zweiten Kanal vorzunehmen, während die Funkverbindung (40) mit der drahtlosen Kommunikationsvorrichtung aufrechterhalten wird; und
Empfangen, von der mindestens einen weiteren drahtlosen Kommunikationsvorrichtung (11; 500; 800), eines oder mehrerer Messberichte (210), welche die mindestens eine Messung darstellen.

17. Drahtlose Kommunikationsvorrichtung (10; 700; 900) nach Anspruch 16, wobei die drahtlose Kommunikationsvorrichtung (10; 700; 900) dazu konfiguriert ist, ein Verfahren nach einem der Ansprüche 8 bis 13 auszuführen.

18. Computerprogramm oder Computerprogrammprodukt, das Programmcode umfasst, der durch mindestens einen Prozessor (850) einer drahtlosen Kommunikationsvorrichtung (11; 500; 800) auszuführen ist, wodurch die Ausführung des Programmcodes bewirkt, dass die drahtlose Kommunikationsvorrichtung (11; 500; 800) ein Verfahren nach einem der Ansprüche 1 bis 6 ausführt.

19. Computerprogramm oder Computerprogrammprodukt, das Programmcode umfasst, der durch mindestens einen Prozessor (850; 950) einer drahtlosen Kommunikationsvorrichtung (10; 700; 900) auszuführen ist, wodurch die Ausführung des Programmcodes bewirkt, dass die drahtlose Kommunikationsvorrichtung (10; 700; 900) ein Verfahren nach einem der Ansprüche 7 bis 13 ausführt.

## Revendications

1. Procédé de commande de transmissions sans fil dans un système de communication sans fil, le procédé comprenant :
sur un premier canal, un dispositif de communication sans fil (11 ; 500 ; 800) maintenant une liaison radio (40) vers un autre dispositif de communication sans fil (10 ; 700 ; 900) qui ne prend pas en charge le fonctionnement multi-liaison ;
le dispositif de communication sans fil (11 ; 500 ; 800) envoyant au dispositif de communication sans fil supplémentaire (10 ; 700 ; 900) une indication que le dispositif de communication sans fil prend en charge le fonctionnement multi-liaison ;
le dispositif de communication sans fil (11 ; 500 ; 800) recevant du dispositif de communication sans fil supplémentaire (10 ; 700 ; 900) une demande (208) d'utiliser le fonctionnement multi-liaison pour effectuer au moins une mesure sur un deuxième canal tout en maintenant la liaison radio (40) avec le dispositif de communication sans fil supplémentaire (10 ; 700 ; 900) ;
en réponse à la demande (208), le dispositif de communication sans fil (11 ; 500 ; 800) utilisant le fonctionnement multi-liaison pour effectuer au moins une mesure sur le deuxième canal tout en maintenant la liaison radio (40) avec l'autre dispositif de communication sans fil ; et
le dispositif de communication sans fil (11 ; 500 ; 800) envoyant au dispositif de communication sans fil supplémentaire (10 ; 700 ; 900) un ou plusieurs rapports de mesure (210) représentant au moins une mesure.

2. Procédé selon la revendication 1,
dans lequel le dispositif de communication sans fil (11 ; 500 ; 800) envoie l'indication dans une trame de demande de sonde (202) et/ou dans une trame de demande d'association (204).

3. Procédé selon la revendication 1 ou 2, comprenant :
le dispositif de communication sans fil (11 ; 500 ; 800) recevant du dispositif de communication sans fil supplémentaire (10 ; 700 ; 900) une indication supplémentaire selon laquelle le dispositif de communication sans fil supplémentaire (10 ; 700 ; 900) prend en charge la coopération avec un dispositif de communication sans fil utilisant un fonctionnement multi-liaison pour communiquer sur un canal et effectuer des mesures sur un autre canal,
dans lequel le dispositif de communication sans fil (11 ; 500 ; 800) reçoit l'indication supplémentaire dans une trame de réponse de sonde (203), dans une trame de réponse d'association (205) et/ou dans une trame de balise (201).

4. Procédé selon l'une quelconque des revendications précédentes,
dans lequel les un ou plusieurs rapports de mesure (210) comprennent au moins un rapport de mesure représentant une force de signal mesurée associée à une ou plusieurs trames reçues, au moins un rapport de mesure représentant une charge sur le deuxième canal, au moins un rapport de mesure représentant la puissance du bruit sur le deuxième canal, au moins un rapport de mesure représentant la puissance d'interférence sur le deuxième canal, au moins un rapport de mesure indiquant un nombre de trames reçues par intervalle de temps, et/ou au moins un rapport de mesure indiquant un ensemble de canaux candidats pour la sélection d'un nouveau canal de fonctionnement du dispositif de communication sans fil supplémentaire (10 ; 700 ; 900).

5. Procédé selon l'une quelconque des revendications précédentes,
dans lequel le système de communication sans fil est basé sur une technologie de réseau local sans fil conforme à la famille de normes IEEE 802.11.

6. Procédé selon la revendication 5,
dans lequel le dispositif de communication sans fil supplémentaire (10 ; 700 ; 900) est un point d'accès du système de communication sans fil et le dispositif de communication sans fil (11 ; 500 ; 800) est une station desservie par le point d'accès.

7. Procédé de commande de transmissions sans fil dans un système de communication sans fil, le procédé comprenant :
sur un premier canal, un dispositif de communication sans fil (10 ; 700 ; 900), qui ne prend pas en charge le fonctionnement multi-liaison, maintenant une liaison radio (40) avec au moins un dispositif de communication sans fil supplémentaire (11 ; 500 ; 800) ;
le dispositif de communication sans fil (10 ; 700 ; 900) recevant à partir de l'au moins un dispositif de communication sans fil supplémentaire (11 ; 500 ; 800) une indication que le dispositif de communication sans fil supplémentaire (11 ; 500 ; 800) prend en charge le fonctionnement multi-liaison ;
le dispositif de communication sans fil (10 ; 700 ; 900) envoyant à l'au moins un dispositif de communication sans fil supplémentaire (11 ; 500 ; 800) une demande d'utilisation du fonctionnement multi-liaison pour effectuer au moins une mesure sur un deuxième canal tout en maintenant la liaison radio (40) avec le dispositif de communication sans fil (10 ; 700 ; 900) ; et
le dispositif de communication sans fil (10 ; 700 ; 900) recevant à partir de l'au moins un dispositif de communication sans fil supplémentaire (11 ; 500 ; 800) un ou plusieurs rapports de mesure (210) représentant au moins une mesure.

8. Procédé selon la revendication 7,
dans lequel le dispositif de communication sans fil (10 ; 700 ; 900) reçoit l'indication dans une trame de demande de sonde (202) et/ou dans une trame de demande d'association (204).

9. Procédé selon la revendication 7 ou 8, comprenant :
le dispositif de communication sans fil (10 ; 700 ; 900) envoyant à l'au moins un dispositif de communication sans fil supplémentaire (11 ; 500 ; 800) une indication supplémentaire selon laquelle le dispositif de communication sans fil (10 ; 700 ; 900) prend en charge la coopération avec un dispositif de communication sans fil supplémentaire utilisant un fonctionnement multi-liaison pour communiquer sur un canal et effectuer des mesures sur un autre canal,
dans lequel le dispositif de communication sans fil (10 ; 700 ; 900) envoie l'indication supplémentaire dans une trame de réponse de sonde (203), dans une trame de réponse d'association (205), et/ou dans une trame de balise (201).

10. Procédé selon l'une quelconque des revendications 7 à 9,
dans lequel les un ou plusieurs rapports de mesure (210) comprennent au moins un rapport de mesure représentant une force de signal mesurée associée à une ou plusieurs trames reçues, au moins un rapport de mesure représentant une charge sur le deuxième canal, au moins un rapport de mesure représentant la puissance du bruit sur le deuxième canal, au moins un rapport de mesure représentant la puissance d'interférence sur le deuxième canal, au moins un rapport de mesure indiquant un nombre de trames reçues par intervalle de temps, et/ou au moins un rapport de mesure indiquant un ensemble de canaux candidats pour la sélection d'un nouveau canal de fonctionnement du dispositif de communication sans fil (10 ; 700 ; 900).

11. Procédé selon l'une quelconque des revendications 7 à 10, comprenant :
sur la base d'un ou plusieurs rapports de mesure reçus, le dispositif de communication sans fil (10 ; 700 ; 900) commandant la commutation du fonctionnement de communication vers le deuxième canal.

12. Procédé selon l'une quelconque des revendications 7 à 11,
dans lequel le système de communication sans fil est basé sur une technologie de réseau local sans fil conforme à la famille de normes IEEE 802.11.

13. Procédé selon la revendication 12,
dans lequel le dispositif de communication sans fil (10 ; 700 ; 900) est un point d'accès du système de communication sans fil et l'au moins un dispositif de communication sans fil supplémentaire (11 ; 500 ; 800) est une station desservie par le point d'accès.

14. Dispositif de communication sans fil (11 ; 500 ; 800), dans lequel le dispositif de communication sans fil (11 ; 500 ; 800) est configuré pour :
sur un premier canal, maintenir une liaison radio (40) vers un dispositif de communication sans fil supplémentaire (10 ; 700 ; 900) qui ne prend pas en charge le fonctionnement multi-liaison ;
envoyer au dispositif de communication sans fil supplémentaire (10 ; 700 ; 900) une indication que le dispositif de communication sans fil prend en charge le fonctionnement multi-liaison ;
recevoir de l'autre dispositif de communication sans fil (10 ; 700 ; 900) une demande (208) d'utiliser le fonctionnement multi-liaison pour effectuer au moins une mesure sur un deuxième canal tout en maintenant la liaison radio (40) avec l'autre dispositif de communication sans fil (10 ; 700 ; 900) ;
en réponse à la demande (208), utiliser le fonctionnement multi-liaison pour effectuer au moins une mesure sur le deuxième canal tout en maintenant la liaison radio (40) avec le dispositif de communication sans fil supplémentaire (10 ; 700 ; 900) ; et
envoyer au dispositif de communication sans fil supplémentaire (10 ; 700 ; 900) un ou plusieurs rapports de mesure représentant au moins une mesure.

15. Dispositif de communication sans fil (11 ; 500 ; 800) selon la revendication 14,
dans lequel le dispositif de communication sans fil (11 ; 500 ; 800) est configuré pour réaliser un procédé selon l'une quelconque des revendications 2 à 6.

16. Dispositif de communication sans fil (10 ; 700 ; 900), dans lequel le dispositif de communication sans fil (10 ; 700 ; 900) ne prend pas en charge le fonctionnement multi-liaison et est configuré pour :
sur un premier canal, maintenir une liaison radio (40) avec au moins un dispositif de communication sans fil supplémentaire (11 ; 500 ; 800) ;
recevoir à partir de l'au moins un dispositif de communication sans fil supplémentaire (11 ; 500 ; 800) une indication que le dispositif de communication sans fil supplémentaire (11 ; 500 ; 800) prend en charge le fonctionnement multi-liaison ;
envoyer à l'au moins un dispositif de communication sans fil supplémentaire (11 ; 500 ; 800) une demande (208) pour utiliser le fonctionnement multi-liaison afin d'effectuer au moins une mesure sur un deuxième canal tout en maintenant la liaison radio (40) avec le dispositif de communication sans fil ; et
recevoir à partir de l'au moins un dispositif de communication sans fil supplémentaire (11 ; 500 ; 800) un ou plusieurs rapports de mesure (210) représentant au moins une mesure.

17. Dispositif de communication sans fil (10 ; 700 ; 900) selon la revendication 16,
dans lequel le dispositif de communication sans fil (10 ; 700 ; 900) est configuré pour réaliser un procédé selon l'une quelconque des revendications 8 à 13.

18. Programme informatique ou produit de programme informatique comprenant un code de programme à exécuter par au moins un processeur (850) d'un dispositif de communication sans fil (11 ; 500 ; 800), par lequel l'exécution du code de programme amène le dispositif de communication sans fil (11 ; 500 ; 800) à réaliser un procédé selon l'une quelconque des revendications 1 à 6.

19. Programme informatique ou produit de programme informatique comprenant un code de programme à exécuter par au moins un processeur (850 ; 950) d'un dispositif de communication sans fil (10 ; 700 ; 900), par lequel l'exécution du code de programme amène le dispositif de communication sans fil (10 ; 700 ; 900) à réaliser un procédé selon l'une quelconque des revendications 7 à 13.
